# EUROPÄISCHE PATENTANMELDUNG

(11) **EP 2 218 653 A1**
(43) Veröffentlichungstag der Anmeldung: **18.08.2010**
(21) Anmeldenummer: 09005758.9
(22) Anmeldetag: 24.04.2009
(51) Int. Cl.: B65D 65/46, B65D 85/804

(54) **Biologisch abbaubare Verpackung und Verfahren zu deren Herstellung**

(30) Priorität: 17.02.2009 EP 09002194; 23.02.2009 EP 09005317
(71) Anmelder: Wons, Uwe, 8006 Zürich (CH)
(72) Erfinder: Wons, Uwe, 8006 Zürich (CH)

(57) **Zusammenfassung**

Die vorliegende Erfindung betrifft spezielle Verpackungen, welche gegebenenfalls mit einer zu extrahierenden Substanz befüllt sind, insbesondere Portionspackungen; spezifische Kunststoffe geeignet für solche Verpackungen; die Herstellung solcher Verpackungen und Kunststoffe sowie die Verwendung solcher Verpackungen und Kunststoffe. Die erfindungsgemäßen Verpackungen, bestehen aus einer Schale (1); gegebenenfalls einer Faserschicht (2), welche inwandig in besagter Schale (4) fixiert ist; einer Verschlussmembran (3), welche stoffschlüssig mit besagter Schale (1) verbunden ist und gegebenenfalls einer Markierung; wobei besagte Schale (1), Faserschicht (2) und Verschlussmembran (3) aus biologisch abbaubarem Material bestehen.

## Beschreibung

Die vorliegende Erfindung betrifft spezielle Verpackungen, insbesondere Portionspackungen, spezifische Kunststoffe geeignet für solche Verpackungen, die Herstellung solcher Verpackungen und Kunststoffe sowie die Verwendung solcher Verpackungen und Kunststoffe.

Verpackungen, auch Portionspackungen und Portionskapseln, sind allgemein bekannt. Es ist ferner bekannt, mittels Extraktion unter Zugabe von unter Druck stehendem Heißwasser ein Getränk aus einer Portionskapsel herzustellen, die mit einer oder mehreren Substanzen gefüllt ist, vgl. bspw. DE 27 52 733, EP 0 844 195, EP 1 165 398, WO 00/56629 und EP 1 190 959. Neben den hier erwähnten Kapseln aus Plastikmaterial werden für die Getränkezubereitung vorrangig Einwegkapseln aus Aluminium verwendet. Um diese nach Gebrauch umweltgerecht aufarbeiten zu können, müssen diese Aluminiumkapseln zusammen mit dem Rest der Extraktion vom Endverbraucher separat gesammelt und über eine Rückführungskette zum Hersteller oder zu einem Recycling-Unternehmen gebracht werden. Dies wird als nachteilig für den Kunden und Hersteller angesehen. Ferner ist fraglich, ob sich alle Kunden diesem durch den Hersteller angebotenen Recyclingprogramm auf Dauer anschliessen. Der Weltmarktanteil von Einzelpackungen (Primärverpackung aus Aluminium oder Kunststoff-Aluminium-Laminat) wird auf 20 Milliarden Einzelportionen für Kaffee / Espresso geschätzt. Die Entsorgung dieser Verpackungen nach Gebrauch mittels Verbrennung erzeugt aus dem im Kaffeesatz gebundenen Kohlenstoff zusätzlich das klimaschädigende Treibhausgas Kohlenstoffdioxid (CO₂), wenn auch in dieser Bilanzbetrachtung CO₂-neutral. Es kann davon ausgegangen werden, dass nur ein Bruchteil dieser Packungen durch Recycling entsorgt wird. Unabhängig vom Entsorgungsweg wird der Kaffeesatz in jedem Fall verbrannt. Die hierdurch entstehende Menge an CO₂ ist nicht gering.

WO 2005/006927 (EP 1 646 304) beschreibt Einwegkapseln zur Getränkezubereitung, bei denen nur rezyklierbares Plastikmaterial verwendet wird. Allerdings wirbt der Patentinhaber für die umweltgerechte Entsorgung durch Verbrennung zusammen mit gewöhnlichem Haushaltsabfall, wodurch aus diesen Kapseln neben Wasser das Treibhausgas Kohlenstoffdioxid (CO₂) entsteht.

WO 02/28241 beschreibt ein kodiertes Kaffeebrühpaket, das mit 8 verschiedenen, außen sichtbar angebrachten, optischen, maschineninterpretierbaren Kennzeichnungen versehen ist, die dazu verwendet werden können, die Extraktionsgeräte automatisch anzuweisen, spezifische Extraktionsprogramme für den jeweils erkannten Brühpakettyp anzuwenden. Diese optischen Kennzeichnungen werden als nicht fälschungssicher und daher für den Markenschutz ungeeignet angesehen. Gleiches gilt auch für die in DE 101 16 239 und DE 201 21 494 beschriebenen rotationssymmetrischen Barcodes zur maschinell lesbaren Kennzeichnung von Portionseinheiten.

Zusammenfassend bleibt festzuhalten, dass die bekannten Verpackungen in der Gesamtschau verschiedene Nachteile aufweisen. Es ist daher eine Aufgabe der vorliegenden Erfindung, eines oder mehrere der Nachteile der bekannten Verpackungen zu beheben.

Die vorstehend umrissenen Aufgaben werden gemäß den unabhängigen Ansprüchen gelöst. Vorteilhafte Ausführungsformen sind in der Beschreibung und den abhängigen Ansprüchen angegeben. Weitere Aspekte der Erfindung sind in den unabhängigen Ansprüchen sowie in der Beschreibung angegeben.

Die Erfindung betrifft somit:
i) spezielle Verpackungen, insbesondere Portionspackungen;
ii) spezifische Materialien, geeignet für solche Verpackungen;
iii) die Herstellung solcher Verpackungen;
iv) die Herstellung solcher Materialien;
v) die Verwendung solcher Verpackungen sowie
vi) die Verwendung solcher Materialien.

Die in nachfolgend aufgeführten allgemeinen, bevorzugten und besonders bevorzugten Ausführungsformen, Definitionen und Alternativen können beliebig miteinander kombiniert werden und sind Gegenstand der vorliegenden Erfindung. Des Weiteren können einzelne Ausführungsformen, Definitionen und / oder Alternativen entfallen.

Sofern sich aus dem direkten Zusammenhang keine andere Bedeutung ergibt, haben die folgenden Begriffe die hier angegebene Bedeutung:
Der Begriff "Recycling" bzw. "Rezyklierung" ist allgemein bekannt, insbesondere wird mit diesem Begriff der Vorgang bezeichnet, bei dem Abfälle in Sekundärrohstoffe überführt werden, z.B. indem aus anfallendem Zivilisationsmüll Ausgangs- bzw. Werkstoffe für neue Produkte erzeugt werden.
Der Begriff "biologisch abbaubar" ist allgemein bekannt, insbesondere bezeichnet er Materialien, welche die Normen EN 13432 und / oder ASTM D6400 für kompostierbare Polymere erfüllen.
Der Begriff "Anteil nachwachsender Rohstoffe" ist allgemein bekannt, insbesondere bezeichnet er den prozentualen Anteil nachwachsender Rohstoffe eines erzeugten Werkstoffes, welcher bspw. nach der Norm ASTM D6866 gemessen wird.

Die Erfindung wird weiterhin illustriert durch die Figuren, wobei die Bezugszeichen die folgende Bedeutung haben:

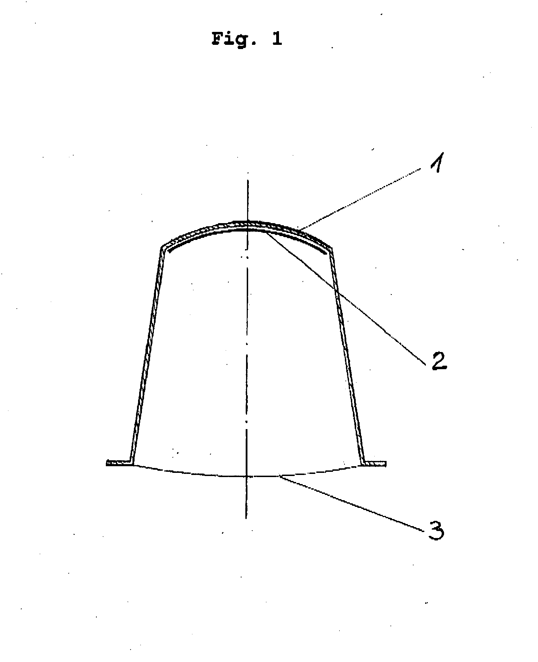

Fig. 1: zeigt eine schematische, rotationssymmetrische Schnittansicht der erfindungsgemäßen Portionspackung, in welcher (1) eine Schale, (2) eine Faserschicht und (3) eine Verschlussmembran darstellen.

In einem **ersten Aspekt** betrifft die Erfindung eine Verpackung, in welcher bestehend aus (i) einer Schale; (ii) gegebenenfalls einer Faserschicht, welche inwandig in besagter Schale fixiert ist; (iii) einer Verschlussmembran, welche stoffschlüssig mit besagter Schale verbunden ist; (iv) gegebenenfalls einer Markierung; wobei besagte Schale, Faserschicht und Verschlussmembran aus biologisch abbaubarem Material bestehen.

Es ist ein Vorteil der hier beschriebenen Verpackungen, dass diese aus biologisch abbaubaren Materialien hergestellt und zusammen mit ihrem Inhalt sowohl vor als auch nach Gebrauch vollständig biologisch abbaubar sind, wobei diese durch Kompostierung, Biovergasung oder andere umweltfreundliche Verfahren in ihre natürlichen Einzelbestandteile zurückführt (und damit zum Beispiel höheren Pflanzen als Nährstoff wieder zur Verfügung steht) oder in Form von Biogas oder Biodiesel als ökologischer Energieträger nutzbar ist. Dadurch kann ein biologischer Kreislauf geschlossen worden, ohne dass dabei die Umwelt belastende Schadstoffe entstehen oder zurückbleiben. Ferner kann so vermieden werden, dass wertvoller Sekundärrohstoff (wie z. B. Aluminium und Kunststoff) in großen Mengen nach und nach auf Mülldeponien verstreut und / oder in Müllverbrennungsanlagen vernichtet wird und so einem fortlaufenden Recycling-, Produktions- und Nutzungsprozess auf Dauer verloren geht.

Weiterhin dient es dem Klimaschutz, wenn Kaffeesatz nicht verbrannt, sondern wie hier vorgeschlagen durch Kompostierung entsorgt wird. Die gezielte Umlenkung der Entsorgung der Portionspackungen von der Verbrennung zu einer Kompostierung bei diesem immensen Handelsvolumen aller Hersteller eröffnet für unsere Umwelt ein grosses Potential an jährlich zusätzlichem Abbau von CO₂ aus der Atmosphäre.

Im Folgenden soll die Erfindung weiter erläutert werden und vorteilhafte Ausführungsformen dargestellt werden, wobei zunächst die einzelnen Begriffe Verpackung, Schale, Faserschicht, Verschlussmembran, biologisch abbaubares Material näher erläutert werden sollen. Diese Ausführungsformen sind ebenfalls Gegenstand der vorliegenden Erfindung.

**Verpackung:** Die erfindungsgemäße Verpackung kann befüllbar oder befüllt, bevorzugt befüllt, ausgeführt werden. Die erfindungsgemäße Verpackung ist vorteilhaft so ausgeführt, dass diese aromadicht und / oder sauerstoffundurchlässig ausgebildet ist. Dies kann durch geeignete Wahl der Materialien und geeignete Verbindung von Verschlussmembran und Schale erreicht werden. Die erfindungsgemäße Verpackung kann verschließbar oder verschlossen, bevorzugt verschlossen, ausgeführt werden.

Die erfindungsgemäße Verpackung kann in verschiedenen Formen und Größen ausgeführt werden. Besonders günstig erweist es sich, diese als Portionsverpackungen auszuführen; d.h, die befüllte Substanz entspricht im Wesentlichen einer einfachen Dosierung, z.B. einer Tasse Kaffee. Die Verpackung ist daher in einer Ausführungsform daran angepasst, 0.5-10g, bevorzugt 1-7g Substanz aufzunehmen. In einer vorteilhaften Ausführungsform ist die Verpackung als Portionskapsel ausgeführt. Die Verpackung kann so ausgeführt sein, dass sie in handelsübliche Extraktionsgeräte (Getränkezubereitungsmaschinen und Getränkezubereitungsautomaten) passt.

**Schale:** Die erfindungsgemäße Schale kann grundsätzlich in verschiedenen Formen und Größen ausgeführt werden. In einer vorteilhaften Ausführungsform wird die Schale im Wesentlichen aus einer kegelstumpfförmigen Seitenwand mit einem an der verjüngten Kegelstumpfseite nach außen kugelsegmentförmig angesetzten Schalenboden sowie einer an der gegenüberliegenden Seite kreisförmig ausgebildeten Versteifung (z.B. in Form eines Flansches) gebildet.

Die erfindungsgemäße Schale kann starr oder halbstarr ausgeführt werden. Eine derartige Ausgestaltung liegt im Rahmen des dem Fachmann geläufigen und kann durch Art und Stärke des verwendeten Materials, Formgebung und Größe erreicht werden.

Die erfindungsgemäße Schale kann aus verschiedenen biologisch abbaubaren Materialien gefertigt werden. Es versteht sich, dass das Material während der Lagerung (d.h. von der Herstellung bis zur Benutzung) und während der Benutzung (z.B. der Extraktion des Füllgutes) stabil sein muss. Geeignete Materialien können aus einer oder mehreren Schichten ("Laminate") bestehen und / oder eine Oberflächenbehandlung aufweisen. Geeignete Materialien für die Schale und in Analogie für die Verschlussmembran sind lebensmittelecht, heißwasserbeständig, heißsiegelfähig und gasundurchlässig. Diese Begriffe sind dem Fachmann bekannt und werden im üblichen Sinn verwendet. Mit dem Begriff "gasundurchlässig" werden insbesondere ausreichende Barriereeigenschaften gegen das Eindringen von Sauerstoff sowie das Austreten von Aromakomponenten beschrieben. Derartige Materialien sind dem Fachmann bekannt. Besonders geeignet sind Polyhydroxybuttersäure (PHB), Polybutylensuccinat (PBS), Polybutylensuccinatadipat (PBSA), Polyhydroxybutyratvalerat (PHBV), Polylactid (PLA), Celluloseester (z.B. Celluloseacetat (CA)), compoundierte Cellulose, welche ggf. teilweise oder vollständig durch Oberflächenbehandlung und / oder Oberflächenbeschichtung verändert wurden; insbesondere welche teilweise oder vollständig durch Plasmabehandlung und / oder Plasmabeschichtung an ihrer Oberfläche verändert wurden. Insbesondere bevorzugt ist,Polyhydroxybuttersäure ("PHB") bzw. PHB, welches mittels Plasmatechnologie behandelt wurde.

**Beschichtung / Nachbehandlung:** Zur Verbesserung der Barriereeigenschaften, wie Gasundurchlässigkeit, können die vorstehend genannten Materialien zusätzlich behandelt werden; dies wurde bereits angedeutet. Eine solche Behandlung kann vor oder nach dem formgebenden Prozess ("Formen", siehe unten), bevorzugt nach dem formgebenden Prozess erfolgen. Als geeignete Behandlungsschritte haben sich die folgenden Verfahren erwiesen:
a) Laminieren, wie Verwendung von Laminaten als Material für Kapsel und / oder Membran; Verwendung von Laminaten, welche mittels biologisch abbaubarem Kleber verbunden sind;
b) Oberflächenmodifikation, wie Plasmabehandlung, mindestens einer Oberfläche;
c) Beschichten, wie Aufbringen einer Barriereschicht, bspw. SiOx, TiOx, AlOx, durch eine kombinierte Plasma-Aerosol-Behandlung; Aufbringen einer Metallisierung, jedoch im Rahmen der EN 13432.
   Die genannten Behandlungen (Laminieren, Oberflächenmodifikation, Beschichtung) zur Verbesserung der Barriereeigenschaften sind beispielhaft aufgeführt und dem Fachmann bekannt; für Schale und Membran können verschiedene Verfahren angewendet werden; ferner können die Verfahren miteinander kombiniert werden.

**Faserschicht:** Die erfindungsgemäße Faserschicht kann aus verschiedenen Materialien ausgebildet werden, z.B. als non-woven Faserschicht; ferner kann sie verschiedene Geometrien aufweisen, bspw. kreisförmig. Die Faserschicht ist im Inneren der Schale fixiert, bspw. am Scheitelpunkt des Kugelsegmentes oder Rand der Schale mit einem oder mehreren Fixationspunkten. Bevorzugt ist die Faserschicht so ausgelegt, dass sie den Schalenboden zu mindesten 30 Flächen-%, bevorzugt zu mindestens 50 Flächen-% belegt. Bevorzugt ist die Faserschicht ferner so ausgelegt, dass sie die Seitenwand zu höchstens 30 Flächen-%, bevorzugt zu höchstens 10 Flächen-% belegt. Eine solche Faserschicht verhindert wirkungsvoll ein Austreten von fester Substanz bei Öffnung der Verpackung im Bereich der Faserschicht.
In einer vorteilhaften Ausführungsform ist die Faserschicht kreisrund und am Schalenboden punktförmig fixiert. Dies bewirkt neben dem Rückhalt von fester Substanz nach Öffnen der Verpackung, das der größere Teil dieser Faserschicht frei beweglich ist und so auch für die gleichmäßige Verteilung der in die Verpackung einströmenden Extraktionsflüssigkeit während des Extraktionsvorganges sorgt.

**Verschlussmembran:** Die erfindungsgemäße Verschlussmembran ist mit der o.g.. Versteifung der Schale über deren gesamte Oberfläche (z.B. dem Flansch) verbunden; bevorzugt luftdicht verbunden. Geeignete Verbindungen sind dem Fachmann bekannt und betreffen bspw. ein Versiegeln mit einer Siegelschicht.

Die erfindungsgemäße Verschlussmembran kann aus verschiedenen Materialien / Materialkombinationen bestehen; die oben für das Material der Schale genannten Anforderungen gelten entsprechend für die Verschlussmembran. Geeignete Materialien sind ausgewählt aus der Gruppe umfassend: nichtkunststoffbeschichtete und / oder metallisierte Biokunststoff-Folie; mehrlagiger Biokunststoff-Folienverbund, der eine oder mehrere nichtkunststoffgeartete Beschichtungen bzw. Metallisierungen eines dieser Typen oder in Kombination beider Typen enthalten kann; Papier / Biokunststoff- bzw. Zellulose / Biokunststoff-Folienverbund mit oder ohne nichtkunststoffgeartete Beschichtung und / oder Metallisierung. Der Begriff "Biokunststoff" beschreibt im Rahmen der vorliegenden Erfindung Kunststoffe, die biologisch abbaubar sind. Solche Materialien sind an sich bekannt oder nach bekannten Verfahren herstellbar. Der Begriff "Folienverbund" beschreibt ein mehrlagiges Laminat bzw. einen Verbundwerksoff aus mehreren identischen oder verschiedenen Folien; solche Materialien sind dem Fachmann bekannt.
Als vorteilhaft für die Verschlussmembran hat sich ein heißsiegelfähiges Laminat aus mindestens zwei metallisierten Biokunststoff-Folien erwiesen.
Als vorteilhaft für die Verschlussmembran hat sich ferner ein Laminat erwiesen, das aus mindestens zwei metallisierten oder anderweitig oberflächenbehandelten bzw. oberflächenbeschichteten Biokunststoff-Folien luftfrei zusammengefügt ist.

Als vorteilhaft für die Verschlussmembran hat sich ferner eine metallbedampfte Cellulosefolie erwiesen; insbesondere ein Laminat aus Aluminium-bedampfter Cellulosefolie mit 2 bis 6 Schichten.

Als vorteilhaft für die Verschlussmembran hat sich ferner erwiesen, wenn sie aus einem Laminat besteht, das aus mindestens zwei miteinander luftfrei verklebten Biokunststoff-Folien zusammengefügt ist, wobei der verwendete Klebstoff ein biologisch abbaubarer Klebstoff ist. In dieser Ausführungsform unterstützt der biologisch abbaubare Klebstoff die Gasundurchlässigkeit der Membran, indem er die Barrierefunktion für Sauerstoff, Luftfeuchtigkeit und Aroma übernimmt.

Die erfindungsgemäße Verschlussmembran kann starr, halbstarr oder flexibel ausgeführt werden, bevorzugt flexibel.
Die Membran kann, muss aber nicht, plan ausgeführt werden.

Eine flexible Verschlussmembran kann ferner eine nach außen gewölbte Vorspannung aufweisen und so ausgestaltet sein, dass sie nur aufgrund der Wirkung der Kraft der unter Druck stehenden Extraktionsflüssigkeit entsprechend der Formgebung des flüssigkeitsdurchlässigen Gegenstückes des verwendeten Extraktionsgerätes vordefiniert perforiert.

**Füllmaterial:** Das Füllmaterial der erfindungsgemäßen Verpackung ist grundsätzlich zunächst nicht limitiert und umfasst jede entwässerte Nahrungsmittelsubstanz zur Herstellung eines Getränkes; vorteilhaft sind feste, kleinteilige Substanzen wie z.B. Granulate, Pulver, zerkleinerte Pflanzenteile. Die Verpackung ist besonders geeignet zum Befüllen mit einer zu extrahierenden Substanz. Als zu extrahierende Substanzen sind bspw. solche zu nennen, die sich durch die Extraktion aufbrauchen (wie bspw. Milchpulver und Kakaopulver) und solche, die sich durch die Extraktion nicht bzw. nur teilweise aufbrauchen (wie bspw. Teeblätter und gemahlener Kaffee). Die zu extrahierende Substanz ist bevorzugt ausgewählt aus der Gruppe umfassend Kaffee-, Tee-, Kakao- und Milchprodukte; insbesondere gerösteter und gemahlener Kaffee, löslicher Kaffee, Tee, Schokoladenprodukte, Schokoladen-Trockenmilch-Produkte. Als bevorzugte Substanz wird gerösteter und gemahlener Kaffee genannt.
In einer vorteilhaften Ausführungsform weist das Füllmaterial, insbesondere eine zu extrahierende Substanz, eine Vorpressung bzw. Verdichtung auf. Es hat sich gezeigt, dass eine solche Vorpressung positiven Einfluss auf eine gewünschte Ausbildung einer Crema hat.
In einer vorteilhaften Ausführungsform enthält die Verpackung neben dem Füllmaterial anstatt der Luft eine Schutzgasatmosphäre.

**Markierung**: In einer weiteren Ausgestaltung der vorliegenden Erfindung enthält die Verpackung ein zusätzliches Element, welche die Funktion einer maschineninterpretierbaren Markierung, insbesondere einer für das menschliche Auge unsichtbaren, eindeutigen Markierung, erfüllt. Solche Markierungen sind an sich bekannt. Beispielhaft genannt seien: Lumineszenzstoff-Gemische (z.B. bekannt aus WO 2008/000461, welches durch Bezugnahme in diese Beschreibung aufgenommen wird) oder andere unsichtbare, optisch interpretierbare Markierungen; glasgekapselter Legierungsfaden von der Dicke eines menschlichen Haares oder andere elektromagnetisch interpretierbare Komponenten. Solche Markierungen können in einen der verwendeten Verpackungswerkstoffe fest eingebunden werden. Alternativ können solche Markierungen an dieser Portionspackung in- oder außenwandig fest angebracht werden. Solche Markierungen sind bekannt kommerziell erhältlich, z.B. Swiss Authentication GmbH oder Sellcor GmbH.

Mit der hier beschriebenen Ausführungsform gelingt es ferner, die vorgenannte Portionspackung mit einer benutzerfreundlichen, lebensmittelsicheren, unsichtbaren und optisch bzw. elektromagnetisch lesbaren Markierung zu versehen, wodurch das Extraktionsgerät vollautomatisch den Typ der Portionspackung erkennt und dementsprechend das für diesen Typ vorgegebene Extraktionsablaufprogramm aktiviert, um so ein optimal zubereitetes Getränk zu erhalten. Diese unsichtbare, fälschungssichere Markierung kann einen gewünschten Markenschutz realisieren.

**biologisch abbaubares Material:** Die für die erfindungsgemäße Verpackung verwendeten Materialien sind biologisch abbaubar, d.h. sie erfüllen die Normen EN 13432 und ASTM D6400 und dürfen die für diese Zertifizierung international anerkannten Logos tragen. Solche Materialien sind kompostierbar und / oder anderweitig umweltfreundlich verwendbar. Die vorstehend beschriebene Nachbehandlung der biologischen Materialien, insbesondere zur Verbesserung der Barriereeigenschaften, wird so gewählt / durchgeführt, dass die o.g. Normen eingehalten werden.

In einer vorteilhaften Ausführungsform werden die biologisch abbaubaren Materialien aus der Gruppe der biologisch erzeugten Materialien ausgewählt ("biobasierte Werkstoffe"). Diese sind weitgehend CO₂-neutral. Diese Gruppe der bio-basierten Werkstoffe umfasst Biokunststoffe und Biokunststoff - Verbundwerkstoffe, die aus von Mikroorganismen erzeugten und / oder nachwachsenden Rohstoffen bestehen. In dieser Ausführungsform gelingt es, die Verwendung von Erdöl-basierten Werkstoffen soweit als möglich einzuschränken. Dies wird als vorteilhaft angesehen, da Erdöl wegen dessen zunehmender Verknappung und seines steigenden Preises nicht mehr als zeitgemäße Rohstoffquelle anzusehen ist, und weil Erdöl-basierte Werkstoffe die CO₂-Bilanz der Erfindung verschlechtern.

Neben den genannten Ausführungsformen sei weiterhin auf die folgenden erfindungsgemäßen Ausführungsformen von Verpackungen verwiesen:
In einer Ausführungsform betrifft die vorliegende Erfindung daher eine vollständig biologisch abbaubare, ausschließlich aus kompostierbaren oder biotechnologisch verwertbaren Werkstoffen hergestellte, aromadichte, sauerstoffundurchlässige Verpackung, die aus einer aus Biokunststoff oder Biokunststoff-Verbundwerkstoffkombination hergestellten, starren oder halbstarren Schale, welche im Wesentlichen aus einer kegelstumpfförmigen Seitenwand mit einem an der verjüngten Kegelstumpfseite nach außen kugelsegmentförmig angesetzten Schalenboden, der eine am Scheitelpunkt oder am Rand inwandig fixierte, kreisförmige non-woven Faserschicht enthalten kann, die ein Austreten von fester Substanz bei Öffnung der Verpackung an dieser Stelle verhindert, sowie einem an der gegenüberliegenden Seite kreisförmig ausgebildeten Flansch oder einer anderen Versteifung aufgebaut ist, und aus einer mit dem Flansch bzw. der Versteifung luftdicht verbundenen Verschlussmembran, die entweder aus einem Papier / Biokunststoff-Verbundwerkstoff oder anderen Bioverbundwerkstoffkombinationen besteht, starr, halbstarr oder flexibel ausgeführt ist, nicht plan eben sein muss, aber durchaus sein kann und im Fall der flexiblen Eigenschaft eine nach außen gewölbte Vorspannung aufweisen kann, zusammengesetzt und mit einer oder mehreren zu extrahierenden Substanzen gefüllt ist, die so komplettiert für die Zubereitung eines Getränkes in einer Getränkezubereitungsmaschine oder in einem Getränkezubereitungsautomaten unter Zuführung von unter Druck stehendem, heißen Wasser ihre Verwendung findet sowie insbesondere das umweltfreundliche Merkmal einer rein biologischen Entsorgungsmöglichkeit aufweist, sodass die gesamte Verpackung mit ihrem Restinhalt nach Gebrauch durch Kompostierung, Biovergasung oder Bioverdieselung in ihre natürlichen Einzelbestandteile zurückführt und damit höheren Pflanzen als Nährstoff wieder zur Verfügung steht, womit der biologische Kreislauf geschlossen wird, ohne dass dabei die Umwelt belastende Schadstoffe entstehen oder zurückbleiben können sowie ferner kein wertvoller Sekundärrohstoff wie zum Beispiel sehr stromintensiv unter strombedingter Treibhausgasemission hergestelltes Aluminium in großen Mengen nach und nach auf Mülldeponien verstreut oder in Müllverbrennungsanlagen vernichtet einem fortlaufenden Recycling-, Produktions- und Nutzungsprozess auf Dauer verloren geht, wobei diese vorgenannte Portionspackung eine zusätzliche Vorrichtung enthalten kann, die die Funktion einer unsichtbaren, eindeutigen Markierung erfüllt, welche entweder wie in Patent WO 2008/000461 beschrieben aus einem Lumineszenzstoff-Gemisch oder aber aus einem glasgekapselten Legierungsfaden von der Dicke eines menschlichen Haares oder aus anderen elektromagnetisch lesbaren Komponenten besteht, innerhalb eines der verwendeten Verpackungswerkstoffe fest eingebunden oder mittels eines mit dieser optisch bzw. elektromagnetisch lesbaren Vorrichtung hergestellten Mittels an der Portionspackung in- oder außenwandig fest angebracht ist und über eine elektronische Sensorfunktionseinheit optisch bzw. elektromagnetisch ausgelesen und elektronisch ausgewertet werden kann.

In einer weiteren Ausführungsform betrifft die vorliegende Erfindung daher eine geschlossene, aromadichte, sauerstoffundurchlässige Verpackung (Fig. 1), die aus einer starren oder halbstarren Schale, welche im Wesentlichen aus einer kegelstumpfförmigen Seitenwand mit einem an der verjüngten Kegelstumpfseite nach außen kugelsegmentförmig angesetzten Schalenboden, der eine am Scheitelpunkt oder am Rand inwandig fixierte, kreisförmige non-woven Faserschicht enthalten kann, die ein Austreten von fester Substanz bei Öffnung der Verpackung an dieser Stelle wirkungsvoll verhindert, sowie einem an der gegenüberliegenden Seite kreisförmig ausgebildeten Flansch oder einer anderen Versteifung aufgebaut ist, und aus einer mit dem Flansch bzw. der Versteifung luftdicht verbundenen Verschlussmembran, die entweder aus einer nichtkunststoffbeschichteten und / oder metallisierten Biokunststofffolie, oder aus einem mehrlagigen Biokunststoff-Folienverbund, der eine oder mehrere nichtkunststoffgeartete Beschichtungen bzw. Metallisierungen eines dieser Typen oder in Kombination beider Typen enthalten kann, oder aus einem Papier / Biokunststoff- bzw. einem Zellulose / Biokunststoff-Verbundwerkstoff mit oder ohne nichtkunststoffgeartete Beschichtung und / oder Metallisierung besteht, starr, halbstarr oder flexibel ausgeführt ist, nicht plan eben sein muss, aber durchaus sein kann, im Fall der flexiblen Eigenschaft eine nach außen gewölbte Vorspannung aufweisen und nur aufgrund der Wirkung der Kraft der unter Druck stehenden Extraktionsflüssigkeit entsprechend der Formgebung des flüssigkeitsdurchlässigen Gegenstückes des verwendeten Extraktionsgerätes vordefiniert zerreißen kann, zusammengesetzt und mit einer oder mehreren zu extrahierenden Substanzen gefüllt ist, die so komplettiert für die Zubereitung eines Getränkes oder eines flüssigen Nahrungsmittels in einer Getränkezubereitungsmaschine oder in einem Getränkezubereitungsautomaten unter Zuführung von unter Druck stehendem, heißen Wasser ihre Verwendung findet, **dadurch gekennzeichnet, dass** diese Verpackung ausschließlich aus kompostierbaren oder anderweitig umweltfreundlich verwertbaren Werkstoffen hergestellt und zusammen mit ihrem Inhalt sowohl vor als auch nach Gebrauch vollständig biologisch abbaubar ist, wobei diese durch Kompostierung, Biovergasung, Bioverdieselung oder andere umweltfreundliche Verfahren in ihre natürlichen Einzelbestandteile zurückführt und damit zum Beispiel höheren Pflanzen als Nährstoff wieder zur Verfügung steht oder in Form von Biogas oder Biodiesel als ökologischer Energieträger nutzbar ist, womit der biologische Kreislauf geschlossen wird, ohne dass dabei die Umwelt belastende Schadstoffe entstehen oder zurückbleiben können sowie ferner kein wertvoller Sekundärrohstoff wie zum Beispiel sehr stromintensiv hergestelltes Aluminium in großen Mengen nach und nach auf Mülldeponien verstreut oder in Müllverbrennungsanlagen vernichtet einem fortlaufenden Recycling-, Produktions- und Nutzungsprozess auf Dauer verloren geht.

In einer weiteren Ausführungsform betrifft die vorliegende Erfindung daher eine Verpackung wie hier beschrieben, **dadurch gekennzeichnet, dass** die Verpackungsschale und die mit ihrer versteifung luftdicht verbundene Verschlussmembran entweder aus einer nichtkunststoffbeschichteten und / oder metallisierten Biokunststoff-Folie oder aus einem mehrlagigen Biokunststoff-Folienverbund, der eine oder mehrere nichtkunststoffgeartete Beschichtungen bzw. Metallisierungen eines dieser Typen oder in Kombination beider Typen enthalten kann, oder aus einem Papier / Biokunststoff-Verbundwerkstoff oder anderen Bio-Verbundwerkstoffen mit oder ohne nichtkunststoffgeartete Beschichtung und / oder Metallisierung besteht.

In einer weiteren Ausführungsform betrifft die vorliegende Erfindung daher eine Verpackung wie hier beschrieben, **dadurch gekennzeichnet, dass** bei Vorhandensein einer kreisförmigen non-woven Faserschicht diese am Schalenboden nur punktförmig fixiert ist, damit neben dem Rückhalt von fester Substanz nach Öffnen der Verpackung der größere Teil dieser non-woven Faserschicht frei beweglich auch für die gleichmäßige Verteilung der in die Verpackung einströmenden Extraktionsflüssigkeit während des Extraktionsvorganges sorgt.

In einer weiteren Ausführungsform betrifft die vorliegende Erfindung daher eine Verpackung wie hier beschrieben, **dadurch gekennzeichnet, dass** diese Verpackung in beiden möglichen Strömungsrichtungen mittels der unter Druck stehenden, heißen Extraktionsflüssigkeit extrahiert werden kann, also durch Flüssigkeitseintritt an der geöffneten Schale und Getränkeaustritt an der inzwischen geöffneten Verschlussmembran oder aber in entgegengesetzter Strömungsrichtung, das heißt durch Flüssigkeitseintritt an der mechanisch geöffneten Verschlussmembran und Getränkeaustritt an dem mechanisch geöffneten, kugelsegmentförmigen Schalenboden, wobei für diese Extraktionsvariante das non-woven Vlies bei der Produktion der Verpackung entfällt.

In einer weiteren Ausführungsform betrifft die vorliegende Erfindung daher eine Verpackung wie hier beschrieben, **dadurch gekennzeichnet, dass** die in dieser Verpackung zu extrahierende Substanz für die bessere Cremabildung eine Vorpressung bzw. Verdichtung aufweisen kann.

In einer weiteren Ausführungsform betrifft die vorliegende Erfindung daher eine Verpackung wie hier beschrieben, **dadurch gekennzeichnet, dass** diese Verpackung zur besseren Aromaerhaltung neben ihrer zu extrahierenden Substanz anstatt der Luft ein Schutzgas enthalten kann.

In einer weiteren Ausführungsform betrifft die vorliegende Erfindung daher eine Verpackung wie hier beschrieben, welche aromadicht verschlossen und gefüllt mit einer oder mehreren Substanzen für die Zubereitung von Getränken in Maschinen oder Automaten mittels Zuführung von unter Druck stehendem Heißwasser ist, **dadurch gekennzeichnet, dass** diese Portionspackung eine zusätzliche Vorrichtung enthält, die die Funktion einer für das menschliche Auge unsichtbaren, eindeutigen Markierung erfüllt, entweder aus einem Lumineszenzstoff-Gemisch oder aber aus einem glasgekapselten Legierungsfaden von der Dicke eines menschlichen Haares oder aus anderen elektromagnetisch lesbaren Komponenten oder unsichtbaren, optischen Markierungen besteht, welche innerhalb mindestens eines verwendeten Verpackungswerkstoffes fest eingebunden oder mittels eines speziell mit dieser optisch bzw. elektromagnetisch lesbaren Vorrichtung hergestellten Mittels an dieser Portionspackung in- oder außenwandig fest angebracht ist und hierfür vorzugsweise das in Patent WO 2008/000461 beschriebene und im Infrarotbereich optisch auswertbare Warensicherungssystem der Deutschen Firma Swiss Authentication GmbH oder das elektromagnetisch lesbare Warensicherungssystem lockfor® der Schweizer Firma Sellcor GmbH zum Einsatz kommt.

In einer weiteren Ausführungsform betrifft die vorliegende Erfindung daher eine Verpackung wie vorstehend beschrieben, **dadurch gekennzeichnet, dass** diese zusätzliche Vorrichtung über eine elektronische Sensorfunktionseinheit optisch im Infrarotbereich oder elektromagnetisch ausgelesen und derart ausgewertet wird, dass das Extraktionsgerät vollautomatisch den Typ der Portionspackung erkennt und dementsprechend das für diesen Typ vorgegebene Extraktionsablaufprogramm aktiviert, um so ein optimal zubereitetes Getränk zu erhalten, oder aber bei gänzlichem Fehlen dieses Auswertesignales aufgrund der Verwendung von markenfremden No-Name-Portionspackungen ohne diese unsichtbare, zusätzliche Vorrichtung das Extraktionsgerät aus Markenschutzgründen die Getränkequalität gezielt beeinträchtigen kann.

Mit der hier beschriebenen Erfindung gelingt es somit, eine zeitgemäße, umweltfreundliche Portionsverpackung gefüllt mit einer oder mehreren Substanzen zur Herstellung eines Getränkes zu realisieren, die nach erfolgtem Extraktionsvorgang samt ihrem ggf. vorliegenden Restinhalt ausschließlich auf biologischem Weg mittels Kompostierung oder anderer umweltfreundlicher verfahren ("Biotechnologien") vollständig in ihre natürlichen Einzelbestandteile zurückgeführt wird, ohne dass dabei die Umwelt belastende Schadstoffe entstehen oder zurückbleiben können sowie ferner ohne wertvolle Sekundärrohstoffe wie das in der Verpackungsindustrie am häufigsten zur Anwendung kommende Aluminium zu verwenden.

In einem **zweiten Aspekt** betrifft die Erfindung Materialien, geeignet für die hier beschriebenen Verpackungen.

Die für die erfindungsgemäße Verpackung verwendeten Materialien sind an sich bekannt oder nach bekannten Verfahren erhältlich. Einzelne Materialien und Gruppen von Materialien sind neu und Gegenstand dieser Erfindung.

Die Erfindung betrifft daher auch Materialien (im Rahmen der Erfindung auch "Biokunststoffe" genannt) ausgewählt aus der Gruppe umfassend Polyhydroxybuttersäure (PHB), Polybutylensuccinat (PBS), Polybutylensuccinatadipat (PBSA), Polyhydroxybutyratvalerat (PHBV), Polylactid (PLA), Celluloseester (z.B. Celluloseacetat (CA)), compoundierte Cellulose, welche teilweise oder vollständig durch Oberflächenbehandlunglund / oder Oberflächenbeschichtung verändert wurden; insbesondere welche teilweise oder vollständig durch Plasmabehandlung und / oder Plasmabeschichtung an ihrer Oberfläche verändert wurden.

Ferner betrifft die Erfindung Formkörper, umfassend (d.h. enthaltend oder bestehend aus) den vorstehend genannten Biokunststoffen. Bevorzugt sind Formkörper in der Form von Blättern, Platten und Schalen.

Bevorzugt erfolgt die Oberflächenbehandlung und / oder Oberflächenbeschichtung auf mindestens einer Seite dieser Formkörper. Die Erfindung betrifft daher auch Formkörper aus den vorstehend genannten Biokunststoffen, welche an mindestens einer Oberfläche durch Plasmabehandlung und / oder Plasmabeschichtung verändert wurden.

In einem **dritten Aspekt** betrifft die Erfindung die Herstellung solcher Verpackungen. Nachfolgend werden verschiedene Varianten für die Herstellung einer erfindungsgemäßen, befüllten Verpackung dargestellt. Die einzelnen Schritte sind an sich bekannt bzw. können in Analogie zu bekannten Herstellungsverfahren durchgeführt werden.

In einer Ausführungsform betrifft die Erfindung daher ein Verfahren zur Herstellung einer Verpackung wie hier beschrieben umfassend die Schritte (i) Formen einer Schale aus biologisch abbaubarem Material; (ii) ggf. Anbringen einer Faserschicht an der Innenwand besagter Schale; (iii) Befüllen der Schale mit Füllgut; (iv) Verschließen der Schale mit einer Membran. Dabei wurden dem in Schritt (i) eingesetzten biologisch abbaubarem Material durch Vorbehandlung die erforderlichen Barriereeigenschaften bereits vermittelt oder diese werden erst nach dem Formprozess durch entsprechende Oberflächenbehandlungen erzeugt. Ferner kann das Material in Schritt (i) bereits eine Faserschicht aufweisen, so dass Schritt (ii) entfällt.

Die einzelnen Schritte seien nachstehend näher erläutert. Diese Schritte können unabhängig voneinander kontinuierlich oder diskontinuierlich ausgelegt sein, so dass das gesamte Verfahren kontinuierlich, teilkontinuierlich oder diskontinuierlich ausgestaltet sein kann. Diese Variationen sind dem Fachmann'geläufig und von der Erfindung umfasst.

**Formen:** Geeignete Formungsverfahren zur Ausbildung von Schalen sind bekannt und umfassen Tiefziehen oder Tiefziehpressen eines Kunststoffrohlings und Spritzguss von Granulat. Sofern ein Kunststoffrohling eingesetzt wird, kann dieser bereits mit einer Faserschicht ausgerüstet sein; in diesem Fall erfolgt Schritt (ii) in Analogie am Kunststoffrohling und nicht an der Schale.

**Anbringen einer Faserschicht:** Geeignete Verfahren zur Befestigung von Faserschichten auf Kunststoffrohlingen bzw. Formkörpern sind bekannt und umfassen Kleben, Verschweißen, Heißsiegeln oder andere dem Fachmann bekannte Verfahren.

**Befüllen:** Geeignete Verfahren zum Befüllen von Schalen sind allgemein bekannt und umfassen i) Befüllen mit feinteiligen Festkörpern (wie Granulat und Pulver) ggf. mit anschließender Verpressung und ii) Befüllen mit Presslingen.

**Verschliessen:** Geeignete Verfahren zum Verschliessen von befüllten oder befüllbaren Schalen mit einer Verschlussmembran sind allgemein bekannt. Solche Verfahren umfassen Versiegeln (wobei Membran und / oder Schale mit einer entsprechenden siegelfähigen Material versehen sind), Verkleben (wobei Membran und / oder Schale mit einem entsprechenden Klebstoff versehen sind), Verpressen (wobei die Membran ein vorgefertigter Verschluss ist, bspw. eine Verschlusskappe), Verschweißen (bspw. durch Ultraschallschweißen) oder durch andere dem Fachmann bekannte Verbindungsverfahren.

Soll lediglich eine befüllbare Verpackung hergestellt werden, so entfällt der Schritt Befüllen.

Soll im Inneren der Verpackung ein inertes Gas anstelle von Luft vorliegen, sind zumindest die Schritte Verschliessen und ggf. Befüllen entsprechend auszulegen. Dies ist dem Fachmann geläufig.

In einem **vierten Aspekt** betrifft die Erfindung die Herstellung erfindungsgemäßer Materialien und Formkörper umfassend (d.h. enthaltend oder bestehend aus) solche Materialien.
Nachfolgend werden verschiedene Varianten für die Herstellung der erfindungsgemäßen Materialien / Formkörper dargestellt. Die einzelnen Schritte sind an sich bekannt bzw. können in Analogie zu bekannten Herstellungsverfahren durchgeführt werden.

In einer Ausführungsform betrifft die Erfindung daher ein Verfahren zur Herstellung eines Formkörpers wie hier beschrieben, umfassend die Schritte (i) Formen eines Formkörpers aus einem Biokunststoff und (ii) Behandeln des erhaltenen Formkörpers in einer Weise, dass die erforderlichen Barriereeigenschaften auf mindestens einer Seite durch Oberflächenbehandlung und / oder Oberflächenbeschichtung erzeugt werden. Der genannte Biokunststoff in Schritt (i) ist vorteilhaft ausgewählt aus der Gruppe umfassend Polyhydroxybuttersäure (PHB), Polybutylensuccinat (PBS), Polybutylensuccinatadipat (PBSA), Polyhydroxybutyratvalerat (PHBV), Polylactid (PLA), Celluloseester (z.B. Celluloseacetat (CA)), compoundierte Cellulose. Die in Schritt (ii) genannte Oberflächenbehandlung erfolgt bevorzugt durch Behandlung mit einem Plasma.

In einer weiteren Ausführungsform betrifft die Erfindung daher ein verfahren zur Herstellung eines Formkörpers wie hier beschrieben, umfassend die Schritte (i) Behandeln eines Biokunststoffes ausgewählt aus den vorstehend genannten Biokunststoffen, die durch Oberflächenbehandlung und / oder Oberflächenbeschichtung verändert wurden, insbesondere welche teilweise oder vollständig durch Plasmatechnologie an ihrer Oberfläche verändert wurden; und (ii) Formen des so erhaltenen Biokunststoffes.

Die einzelnen Schritte seien nachstehend näher erläutert. Diese Schritte können unabhängig voneinander kontinuierlich oder diskontinuierlich ausgelegt sein, so dass das gesamte Verfahren kontinuierlich, teilkontinuierlich oder diskontinuierlich ausgestaltet sein kann. Diese Variationen sind dem Fachmann geläufig und von der Erfindung umfasst.

**Formen:** Grundsätzlich können alle für Kunststoffe geeigneten Verfahren zur Formgebung verwendet werden, einschließlich Extrusion, Spritzgießen, Kalandrieren, Rotationsformen, Blasformen, Schäumen ferner Umformverfahren wie Tiefziehen oder Tiefziehpressen.

Oberflächenbehandlung / -beschichtung: Grundsätzlich sind alle Technologien geeignet, welche die erforderlichen Barriereeigenschaften erzeugen, bspw. die Behandlung mit Kaltplasma.

Behandlung mit Kaltplasma: Die Behandlung von Kunststoffen mit Kaltplasma ist an sich bekannt. Kaltplasma bzw. "kaltes" Plasma kann durch Einstrahlung von Hochfrequenz und unter Raumtemperatur hergestellt werden. Es wird davon ausgegangen, dass Elektronen durch Mikrowellenenergie in Schwingung versetzt werden; nur die Elektronen können den Richtungsänderungen des hochfrequenten Feldes folgen, die wesentlich schwereren Ionen bleiben in Ruhe; wodurch sich der Zustand eines nicht-thermischen, sprich "kalten" Plasmas einstellt. Durch Verwendung von Mikrowellen können Plasmen auch bei Atmosphärendruck erzeugt werden.

In einem **fünften Aspekt** betrifft die Erfindung die Verwendung solcher Verpackungen und Verfahren zur Extraktion von Füllmaterialien.

Die hier beschriebene Verpackung, insbesondere in der Form einer Portionskapsel, ist für die Zubereitung eines Getränkes oder eines flüssigen Nahrungsmittels in einer Getränkezubereitungsmaschine bzw. -automaten unter Zuführung von unter Druck stehendem, heißem Wasser geeignet. Die Erfindung betrifft daher auch die Verwendung einer Verpackung wie hier beschrieben zur Extraktion von Substanzen. Die Erfindung betrifft daher ferner die Verwendung einer Verpackung wie hier beschrieben zur Herstellung / Bereitstellung von flüssigen Nahrungsmitteln und / oder Getränken, insbesondere in einer portionierten vorbestimmten oder vorbestimmbaren Menge.

Die erfindungsgemäße Verpackung kann in beiden möglichen Strömungsrichtungen mittels der unter Druck stehenden, heißen Extraktionsflüssigkeit extrahiert werden; also entweder durch Flüssigkeitseintritt an der geöffneten Schale und Getränkeaustritt an der inzwischen geöffneten Verschlussmembran oder aber in entgegengesetzter Strömungsrichtung. Die Erfindung betrifft daher ein Verfahren zum Extrahieren einer Substanz aus einer hier beschriebenen Verpackung, bei der die Extraktionsflüssigkeit entweder an der geöffneten Schale (insbesondere am kugelsegmentförmigen Schalenboden) zugeführt wird und die extrahierte Flüssigkeit (z.B. Getränk oder flüssiges Nahrungsmittel) an der geöffneten Verschlussmembran austritt; oder bei der die Extraktionsflüssigkeit an der geöffneten Verschlussmembran zugeführt wird und die extrahierte Flüssigkeit an der geöffneten Schale austritt.

In einer weiteren Ausführungsform betrifft die vorliegende Erfindung daher ein Extraktionsverfahren wie hier beschrieben, **dadurch gekennzeichnet, dass** vor Extraktionsbeginn die vorstehend beschriebene Markierung ausgelesen wird und einem daran angepassten Extraktionsprogramm zugeordnet wird.
Das Auslesen einer Markierung kann über eine elektronische Sensorfunktionseinheit optisch im Infrarotbereich oder elektromagnetisch erfolgen. Die Auswertung und Zuordnung bezweckt, dass das Extraktionsgerät vollautomatisch den Typ der Verpackung erkennt und dementsprechend das für diesen Typ vorgegebene Extraktionsablaufprogramm aktiviert. Durch diese Maßnahme wird bspw. ein optimal zubereitetes Getränk erhalten. Ferner kann bei Fehlen der Markierung, z.B. aufgrund der Verwendung von falschen oder defekten Verpackungen, kein oder ein speziell angepasstes Extraktionsprogramm aktiviert werden.

In einem **sechsten Aspekt** betrifft die Erfindung die Verwendung der vorstehend genannten Materialien. Die vorstehend genannten, durch Oberflächenbehandlung und / oder Oberflächenbeschichtung veränderten Biokunststoffe bzw. Formkörper zeichnen sich durch vorteilhafte Eigenschaften wie Temperaturbeständigkeit, Druckbeständigkeit und / oder geringe Gaspermeabilität, insbesondere Sauerstoff- und Aromadichtigkeit aus.

Die erfindungsgemäßen Materialien / Formkörper können daher als Verpackungsmaterial / Verpackung verwendet werden, insbesondere für luftempfindliche Füllgüter, wie z.B. Lebensmittel. Sie können ferner als Verpackungsmaterial / Verpackung für. Füllgüter verwendet werden, die während der Lagerung und / oder vor der Verwendung erhöhten Temperaturen und / oder Drücken ausgesetzt sind. Sie können ferner als Extraktionsbehälter verwendet werden.

## Patentansprüche

1. Verpackung, welche gegebenenfalls mit einer zu extrahierenden Substanz befüllt ist, bestehend aus
i) einer Schale;
ii) gegebenenfalls einer Faserschicht, welche inwandig in besagter Schale fixiert ist;
iii) einer Verschlussmembran, welche stoffschlüssig mit besagter Schale verbunden ist
iv) gegebenenfalls einer Markierung, welche
a) an der Verpackung oder
b) in der Verpackung angeordnet ist
oder
c) fest innerhalb der Schale oder der Verschlussmembran angeordnet ist;
wobei besagte Schale, Faserschicht und Verschlussmembran jeweils aus biologisch abbaubarem Material bestehen.

2. Verpackung gemäß Anspruch 1 **dadurch gekennzeichnet, dass** das Material der Schale und der Verschlussmembran lebensmittelecht, heißwasserbeständig, heißsiegelfähig und gasundurchlässig ist und dass das Material der Faserschicht lebensmittelecht und heißwasserbeständig ist.

3. Verpackung gemäß einem der vorstehenden Ansprüche, **dadurch gekennzeichnet, dass** das Material der Schale
i) ausgewählt ist aus der Gruppe umfassend Polyhydroxybuttersäure (PHB), Polybutylensuccinat (PBS), Polybutylensuccinatadipat (PBSA), Polyhydroxybutyratvalerat (PHBV), Polylactid (PLA), Celluloseester und compoundierte Cellulose sowie Laminaten dieser Materialien und / oder
ii) teilweise oder vollständig durch Plasmabehandlung und / oder Plasmabeschichtung an ihrer Oberfläche verändert wurden.

4. Verpackung gemäß einem der vorstehenden Ansprüche, **dadurch gekennzeichnet, dass** die Faserschicht aus einem non-woven Material besteht.

5. Verpackung gemäß einem der vorstehenden Ansprüche, **dadurch gekennzeichnet, dass**
i) bei vorgesehener Extraktionsrichtung von Schalenboden (i) zu Verschlussmembran (iii) eine Faserschicht (ii) vorliegt und
ii) bei vorgesehener Extraktionsrichtung von Verschlussmembran (iii) zu Schalenboden (i) keine Faserschicht (ii) vorliegt.

6. Verpackung gemäß einem der vorstehenden Ansprüche, **dadurch gekennzeichnet, dass** die Verschlussmembran aus einem Laminat besteht, das aus mindestens zwei oberflächenbehandelten bzw. oberflächenbeschichteten, insbesondere metallisierten, Biokunststoff-Folien luftfrei zusammengefügt ist.

7. Verpackung gemäß einem der Ansprüche 1 bis 5, **dadurch gekennzeichnet, dass** die Verschlussmembran aus einem Laminat besteht, das aus mindestens zwei miteinander luftfrei verklebten Biokunststoff-Folien zusammengefügt ist, wobei der verwendete Klebstoff ein biologisch abbaubarer Klebstoff ist.

8. Verpackung gemäß einem der vorstehenden Ansprüche, **dadurch gekennzeichnet, dass** die zu extrahierende Substanz ausgewählt ist aus der Gruppe umfassend Kaffee-, Tee-, Kakao- und Milchprodukte; insbesondere gerösteter und gemahlener Kaffee, löslicher Kaffee, Tee, Schokoladenprodukte, Schokoladen-Trockenmilch-Produkte oder jede andere entwässerte Nahrungsmittelsubstanz zur Herstellung eines Getränkes.

9. Verpackung gemäß einem der vorstehenden Ansprüche, **dadurch gekennzeichnet, dass** die Markierung (iv) für das menschliche Auge unsichtbar ist.

10. Kunststoff ausgewählt aus der Gruppe PHB, PBS, PBSA, PHBV, PLA, Celluloseester, compoundierte Cellulose, **dadurch gekennzeichnet, dass** dieser teilweise oder vollständig durch eine Oberflächenbehandlung und / oder Oberflächenbeschichtung, insbesondere eine Kaltplasma-Behandlung, modifiziert ist.

11. Formkörper umfassend einen Kunststoff gemäß Anspruch 10.

12. Verfahren zur Herstellung einer Verpackung gemäß einem der Ansprüche 1 bis 9 umfassend die Schritte
i) Formen einer Schale aus biologisch abbaubarem Material
ii) gegebenenfalls Anbringen einer Faserschicht an der Innenwand besagter Schale
iii) Befüllen der Schale mit Füllgut
iv) Verschliessen der Schale mit einer Membran.

13. Verfahren zur Herstellung eines Formkörpers gemäß Anspruch 11, umfassend die Schritte
i) Formen eines Formkörpers aus einem Kunststoff ausgewählt aus der Gruppe umfassend PHB, PBS, PBSA, PHBV, PLA, Celluloseester und compoundierte Cellulose und anschließendes
ii) Behandeln und / oder Beschichten des erhaltenen Formkörpers an mindestens einer Oberfläche mittels Plasma
oder
i) Behandeln und / oder Beschichten eines Biokunststoffes ausgewählt aus der Gruppe umfassend PHB, PBS, PBSA, PHBV, PLA, Celluloseester und compoundierte Cellulose mittels Plasma sowie anschließendes
ii) Formen des so erhaltenen Biokunststoffes
oder
i) Verbinden, insbesondere Laminieren oder luftfreies Verkleben, von mindestens zwei Biokunststoff-Folien ausgewählt aus der Gruppe umfassend PHB, PBS, PBSA, PHBV, PLA, Celluloseester und compoundierte Cellulose mittels eines barriereerzeugenden Bioklebstoffes,
ii) gegebenenfalls Behandeln und / oder Beschichten mindestens einer Oberfläche dieses Laminates mittels Plasma sowie anschließendes
iii) Formen des so erhaltenen Laminates aus Biokunststoff und biologisch abbaubarem Bioklebstoff und
iv) gegebenenfalls Behandeln und / oder Beschichten mindestens einer Oberfläche des erhaltenen Formkörpers mittels Plasma.

14. Verwendung von Verpackungen gemäß einem der Ansprüche 1 bis 9 zur Herstellung und / oder Bereitstellung von flüssigen Nahrungsmitteln und / oder Getränken, insbesondere in einer portionierten vorbestimmten oder vorbestimmbaren Menge.

15. Verwendung von Formkörpern gemäß Anspruch 11 oder Kunststoffen gemäß Anspruch 10 zur Herstellung einer Verpackung, insbesondere einer Verpackung gemäß einem der Ansprüche 1 bis 9.
